# EUROPÄISCHE PATENTSCHRIFT

(11) **EP 1 050 742 B1**
(45) Veröffentlichungstag und Bekanntmachung des Hinweises auf die Patenterteilung: **18.06.2008**
(21) Anmeldenummer: 00107758.5
(22) Anmeldetag: 11.04.2000
(51) Int. Cl.: G01B 11/00, G01B 11/02, G01D 5/347

(54) **Abtasteinheit für eine optische Positionsmesseinrichtung**
Scanning unit for an optical position measuring device
Unité de balayage pour un dispositif optique de mesure de position

(30) Priorität: 07.05.1999 DE 19921309
(43) Veröffentlichungstag der Anmeldung: 08.11.2000
(73) Patentinhaber: Dr. Johannes Heidenhain GmbH, 83292 Traunreut (DE)
(72) Erfinder: Burgschat, Reiner, 07745 Jena (DE)

(56) Entgegenhaltungen:
- EP-A- 0 395 844
- DE-A- 19 527 287

## Beschreibung

Die vorliegende Erfindung betrifft eine Abtasteinheit für eine optische Positionsmeßeinrichtung. Die Abtasteinheit ist hierbei neben der Erzeugung von Inkrementalsignalen insbesondere auch für die Erzeugung von Referenzimpulssignalen geeignet.

Bekannte inkrementale Positionsmeßeinrichtungen bieten neben der Erzeugung positionsabhängiger Inkementalsignale zumeist auch die Möglichkeit, an ein oder mehreren definierten Stellen entlang der Meßstrecke sogenannte Referenzimpulssignale zu erzeugen. Mit Hilfe der Referenzimpulssignale kann dann in bekannter Art und Weise ein Absolutbezug bei der Positionsmessung hergestellt werden.

Auch die in der Veröffentlichung von R. Burgschat mit dem Titel "Die neue Dimension der Weg- und Winkelmeßtechnik" in F & M 104 (1996) 10, S. 752 ― 756 beschriebene Abtasteinheit einer inkrementalen Positionsmeßeinrichtung bietet die Möglichkeit, Referenzimpulssignale an ein oder mehreren Stellen der Meßstrecke zu detektieren. Die Abtasteinheit umfaßt hierbei ein erstes Fotodiodenarray, das zur Erzeugung der Inkrementalsignale dient; eine Beschreibung dieses Fotodiodenarrays findet sich desweiteren auch in der DE 195 27 287 A1. In Meßrichtung beabstandet hiervon und senkrecht zur Meßrichtung versetzt ist ein zweites Fotodiodenarray angeordnet. Das zweite Fotodiodenarray dient zur Erzeugung des Referenzimpulssignales, d.h. damit kann eine Referenzmarkierung auf Seiten eines Maßstabes photoelektrisch erfaßt werden, die seitlich benachbart zur Inkrementalteilungsspur in einer Referenzmarkierungsspur angeordnet ist.
Bei einer derartigen Erzeugung des Referenzimpulssignales können nunmehr unter bestimmten Umständen Fehlmessungen resultieren. So ist es möglich, daß beispielsweise eine lokale Verschmutzung des Maßstabes im Bereich der Referenzmarkierungsspur zur Erzeugung eines Referenzimpulssignales führt. Desweiteren ist im Fall der Dejustage von Abtasteinheit und Maßstab um eine Achse senkrecht zur Maßstabebene keine ortsinvariante Lage des Referenzimpulssignales in Bezug auf die Inkrementalsignale mehr gewährleistet.

Aufgabe der vorliegenden Erfindung ist es daher, eine Abtasteinheit für eine optische Positiansmeßeinrichtung anzugeben, bei der die oben angesprochenen Probleme im Zusammenhang mit der Erzeugung von Referenzimpulssignalen möglichst vermieden werden. Darüberhinaus ist ein kompakter Aufbau der entsprechenden Abtasteinheit wünschenswert.

Diese Aufgabe wird gelöst durch eine Abtasteinheit mit den Merkmalen des Anspruches 1.

Vorteilhafte Ausführungsformen der erfindungsgemäßen Abtasteinheit ergeben sich aus den Maßnahmen, die in den abhängigen Patentansprüchen aufgeführt sind.

Gegenstand des Anspruches 16 ist ferner eine optische Positionsmeßeinrichtung, die eine erfindungsgemäß aufgebaute Abtasteinheit umfaßt.

Die erfindungsgemäßen Maßnahmen stellen nunmehr sicher, daß eine eventuelle Verdrehung der Abtasteinheit gegenüber dem Maßstab um eine Achse, die senkrecht zur Maßstabebene orientiert ist, nicht zu einer fehlerhaften Bestimmung der Referenzposition führt. Es ist vielmehr auch in diesem Fall die stabile Phasenlage des erzeugten Referenzimpulssignales in Bezug auf die Inkrementalsignale gewährleistet.

Desweiteren liegt aufgrund der erfindungsgemäßen Erzeugung des Referenzimpulssignales eine deutlich vergrößerte Verschmutzungsunempfindlichkeit vor. Während bei einem System mit lediglich einseitig benachbart zur Inkrementalteilungsspur angeordneten Referenzmarkierungen eine lokale Verschmutzung in diesem Bereich zur fehlerhaften Erzeugung eines Referenzimpulssignales führen kann, ist bei Verwendung der erfindungsgemäßen Abtasteinheit kein Ausgangs-Referenzimpulssignal aufgrund einer eventuellen Verschmutzung des Maßstabes erzeugbar. Grund hierfür ist die Tatsache, daß erfindungsgemäß zwei Referenzmarkierungsspuren benachbart zur Inkrementalteilungsspur abgetastet werden; lediglich im Fall der tatsächlichen Detektion von Teil-Referenzimpulssignalen in beiden Referenzmarkierungsspuren resultiert überhaupt ein Ausgangs-Referenzimpulssignal.

Darüberhinaus ist aufzuführen, daß nunmehr sowohl für die Abtastung der Inkrementalteilungspur als auch für die Abtastung der Referenzmarkierungen auf dem Maßstab lediglich eine einzige Lichtquelle erforderlich ist. Demgegenüber erforderte die in oben genannter Veröffentlichung beschriebene Variante der Abtasteinheit noch zwei separate Lichtquellen.

Ingesamt ergibt sich aufgrund der erfindungsgemäßen Manahmen somit eine äußerst kompakt bauende Abtasteinheit für eine optische Positionsmeßeinrichtung, die auch unter beengten Einbaubedingungen eingesetzt werden kann.

Selbstverständlich ist es möglich, die erfindungsgemäße Abtasteinheit sowohl in linearen wie auch in rotatorischen Positionsmeßeinrichtungen zu verwenden.

Weitere Vorteile sowie Einzelheiten der erfindungsgemäßen Abtasteinheit ergeben sich aus der nachfolgenden Beschreibung eines Ausführungsbeispieles der erfindungsgemäßen Abtasteinheit sowie mehrerer Auswerte-Schaltungsanordnungen anhand der beiliegenden Zeichnungen.

Dabei zeigt
- Figur 1: eine schematische Darstellung eines Ausführungsbeispieles der erfindungsgemäßen Abtasteinheit in Verbindung mit einem abgetasteten Maßstab;
- Figur 2: eine Draufsicht auf den abgetasteten Maßstab aus Figur 1;
- Figur 3: eine Draufsicht auf die Detektorebene der erfindungsgemäßen Abtasteinheit aus Figur 1;
- Figur 4a: ein Blockschaltbild einer ersten Schaltungsanordnung zur Erzeugung des Ausgangs-Referenzimpulssignales aus den erfaßten Signalen;
- Figur 4b: ein Blockschaltbild einer zweiten Schaltungsanordnung zur Erzeugung des Ausgangs-Referenzimpulssignales aus den erfaßten Signalen;
- Figur 5a - 5d: verschiedene Darstellungen von Signalen innerhalb der Blockschaltbilder aus den Figuren 4a und 4b, anhand der die erfindungsgemäße Erzeugung von Ausgangs-Referenzimpulssignalen erläutert wird.

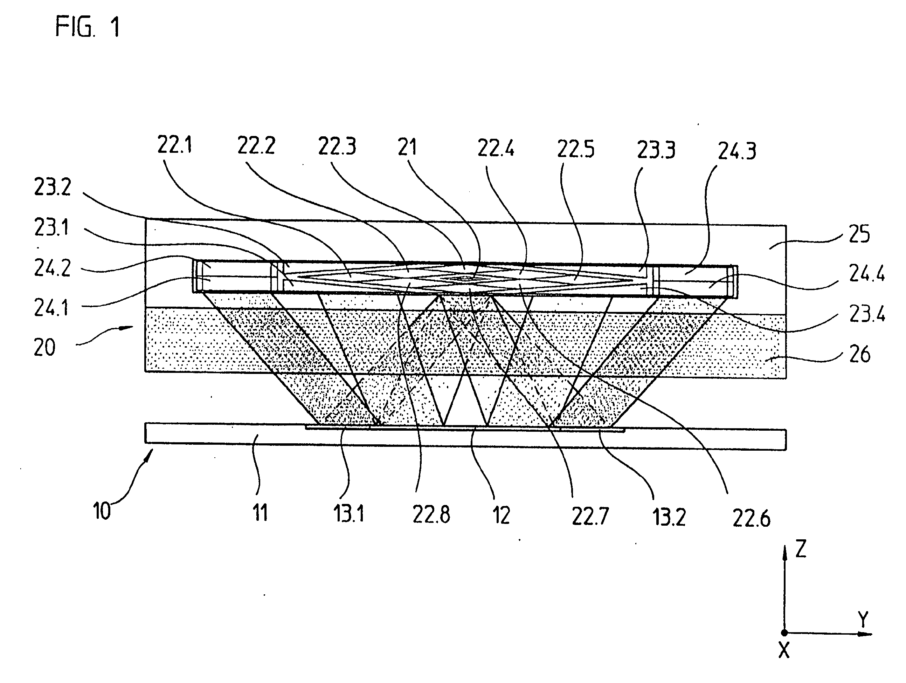

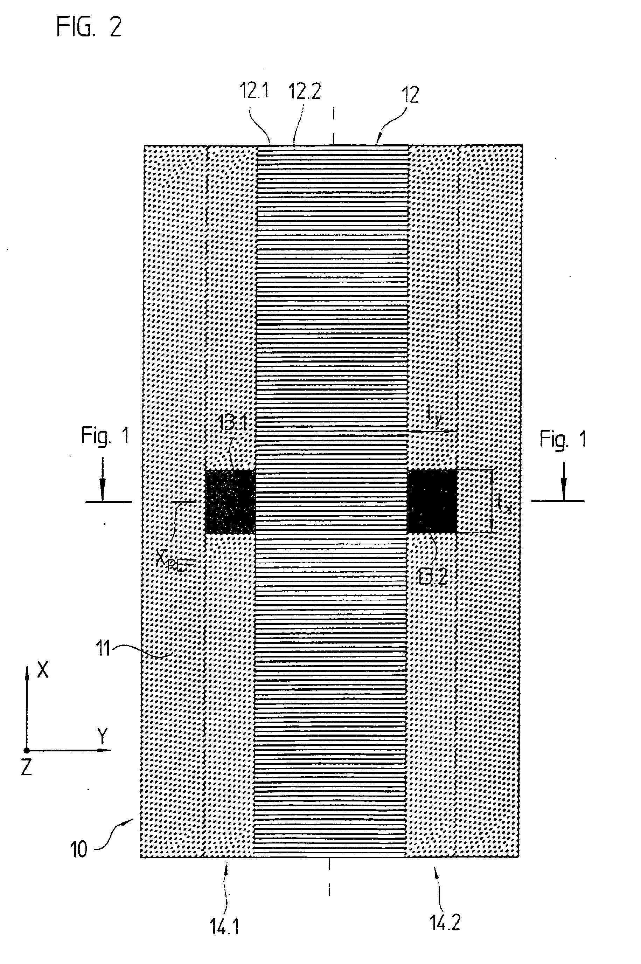

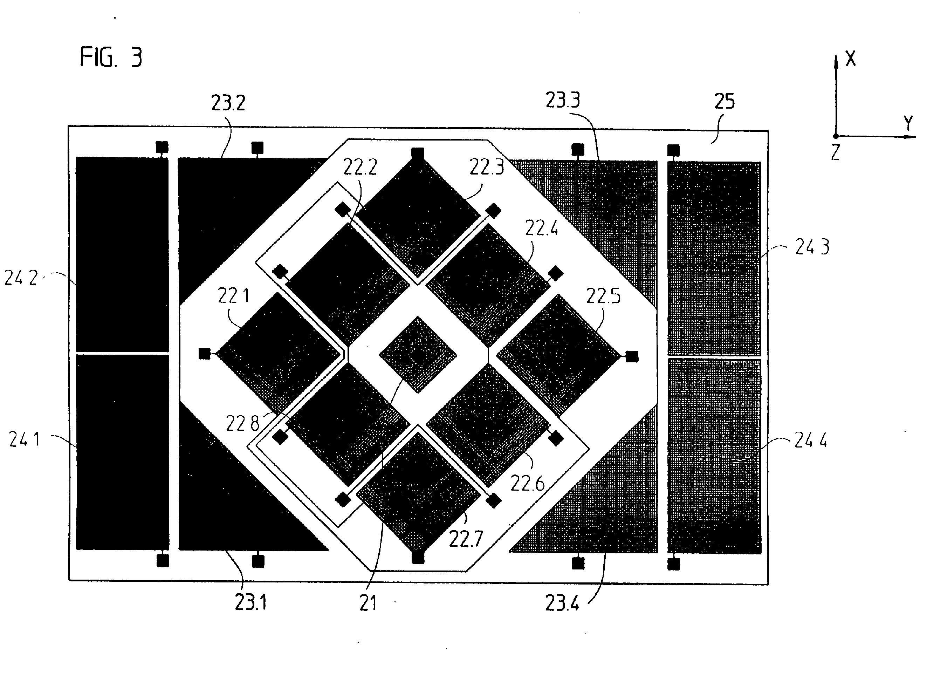

In Figur 1 ist eine schematische Darstellung einer optischen Positionsmeßeinrichtung gezeigt, die neben der erfindungsgemäßen Abtasteinheit 20 den damit abgetasteten Maßstab 10 umfaßt. Der verwendete Maßstab 10 ist in einer Draufsicht in Figur 2 gezeigt. Figur 3 zeigt eine detaillierte Ansicht der Detektorebene der Abtasteinheit 20.

Die Abtasteinheit 20 und der Maßstab 10 sind in der angegebenen Meßrichtung x relativ zueinander verschiebbar angeordnet; die Meßrichtung x ist damit in Figur 1 senkrecht zur Zeichenebene orientiert.

Das dargestellte Ausführungsbeispiel der optischen Positionsmeßeinrichtung dient zur Erfassung linearer Relativbewegungen von Abtasteinheit 20 und Maßstab 10. Eine entsprechend ausgebildete Positionsmeßeinrichtung und kann etwa in einer numerisch gesteuerten Werkzeugmaschine eingesetzt werden. Die von der Positionsmeßeinrichtung erzeugten, diversen positionsabhängigen Abtastsignale werden hierbei zur Weiterverarbeitung an eine nicht dargestellte Auswerteeinheit übertragen, beispielsweise an eine numerische Werkzeugmaschinensteuerung.

Alternativ zur dargestellten Linear-Variante kann die erfindungsgemäße Abtasteinheit 20 selbstverständlich auch in Meßanordnungen zur Erfassung rotatorischer Relativbewegungen eingesetzt werden.

Der abgetastete Maßstab 10 besteht im Ausführungsbeispiel der Figuren 1 - 3 aus einem Trägerkörper 11, auf dem mittig eine Inkrementalteilungsspur 12 in Meßrichtung x angeordnet ist. In der Inkrementalteilungsspur 12 erstrecken sich in Meßrichtung x periodisch angeordnete reflektierende Teilbereiche 12.1 und nicht-reflektierende Teilbereiche 12.2, deren Längsachsen jeweils in der angegebenen y-Richtung orientiert sind, d.h. senkrecht zur Meßrichtung x. Die Teilungsperiode TP der Inkrementalteilungsspur 12 wird in einer möglichen Ausführungsform z.B. TP = 20µm gewählt. Als Trägerkörper 11 kann etwa ein Metallband dienen, auf dem im Bereich der Inkrementalteilungsspur 12 die Teilbereiche 12.1, 12.2 mit den entsprechenden optischen Eigenschaften ausgebildet werden.

Die materialmäßige Ausbildung des Maßstabes 10 ist hierbei nicht erfindungswesentlich, d.h. der Maßstab 10 kann grundsätzlich auch alternativ zur angegebenen Ausführungsform realisiert werden.

Seitlich benachbart zur Inkrementalteilungsspur 12 sind im gezeigten Beispiel desweiteren zwei Referenzmarkierungen 13.1, 13.2 an einer Referenzposition x_{REF} in zwei Referenzmarkierungsspuren 14.1, 14.2 angeordnet. Mit Hilfe der Referenzmarkierungen 13.1, 13.2 wird somit eine eindeutige Absolutposition entlang der Meßstrecke definiert, über die der Absolutbezug der hochauflösenden Inkrementalmessung in bekannter Art und Weise hergestellt werden kann.

Selbstverständlich können auch noch an weiteren Stellen der Referenzmarkierungsspuren 14.1, 14.2 derartige Referenzmarkierungen 13.1, 13.2 paarweise an entsprechenden Referenzpositionen x_{REF} des Maßstabes 10 angebracht werden. Ebenso ist es möglich, etwa auch sogenannte abstandscodierte Referenzmarkierungen vorzusehen und erfindungsgemäß abzutasten etc..

Im Ausführungsbeispiel der Figuren 1 ― 3 weisen die beiden seitlich benachbart zur Inkrementalteilungsspur 12 angeordneten Referenzmarkierungen 13.1, 13.2 in Meßrichtung x eine Länge Iₓ = 200µm auf; die Länge I_{y} der Referenzmarkierungen 13.1, 13.2 in Strichrichtung der Inkrementalteilungsspur 12 wird beispielsweise I_{y} = 500µm gewählt.

Die Referenzmarkierungen 13.1, 13.2 sind in diesem Beispiel als nicht-reflektierende Bereiche auf dem ansonsten reflektierenden Trägerkörper 12 ausgebildet.
Im Zusammenhang mit den verschiedenen optischen Eigenschaften der Teilbereiche 12.1, 12.2 in der Inkrementalteilungsspur 12 bzw. der Referenzmarkierungen 13.1, 13.2 in den Referenzmarkierungsspuren 14.1, 14.2 sei an dieser Stelle betont, daß eine wie oben spezifizierte Auslegung selbstverständlich nicht zwingend erfolgen muß. Es kann beispielsweise in der Inkrementalteilungsspur 12 ausreichen, Teilbereiche 12.1, 12.2 alternierend mit unterschiedlich hoher Reflektivität auszubilden. Ebenso könnten die Referenzmarkierungen 13.1, 13.2 in den Referenzmarkierungsspuren 14.1, 14.2 hoch reflektierend ausgelegt werden, während die angrenzenden Bereiche der Trägerkörper-Oberfläche lediglich gering reflektierend wirken etc..

Wie bereits oben angedeutet bietet eine derartige Anordnung von zwei Referenzmarkierungen 13.1, 13.2 seitlich benachbart zur Inkrementalteilungsspur 12 deutliche Vorteile gegenüber der lediglich einseitigen Anordnung einer Referenzmarkierung. So ist damit praktisch ausgeschlossen, daß etwa eine lokale Verschmutzung, die ebenfalls optisch reflexmindernd wirkt und sich benachbart zur Inkrementalteilungsspur 12 befindet, als Referenzmarkierung interpretiert werden kann. Dies wird durch die nachfolgend noch detailliert zu erläuternde Verarbeitung der resultierenden Abtastsignale aus beiden Referenzmarkierungen 13.1, 13.2 sichergestellt.
Ferner ist auch im Fall einer Verdrehung der Abtasteinheit 20 gegenüber dem Maßstab 10 um die z-Achse sichergestellt, daß die Phasenlage des letztlich erzeugten Ausgangs-Referenzimpulssignales sich gegenüber den Inkrementalsignalen nicht unerwünscht verändert.

Auf Seiten der erfindungsgemäßen Abtasteinheit 20 sind in der schematischen Darstellung der Figur 1 eine Reihe wichtiger Komponenten erkennbar, die allesamt in einer einzigen Baueinheit angeordnet sind. Im Zusammenhang mit der Beschreibung der erfindungsgemäßen Abtasteinheit 20 sei an dieser Stelle auch auf die Figur 3 verwiesen, die eine Ansicht der Detektorebene in der Abtasteinheit 20 zeigt.

Die erfindungsgemäße Abtasteinheit 20 umfaßt eine zentral angeordnete Lichtquelle 21, beispielsweise eine geeignete LED. Die Lichtquelle 21 dient hierbei sowohl zur Beleuchtung der Inkrementalteilungsspur 12 auf dem Maßstab 10 wie auch zur Beleuchtung der Referenzmarkierungen 13.1, 13.2 auf demselben. Symmetrisch um die Lichtquelle 21 ist eine Anordnung aus mehreren Inkrementalsignal-Detektorelementen 22.1 ― 22.8 vorgesehen, die nachfolgend kurz als Inkrementalsignal-Abtastanordnung bezeichnet sei. Im dargestellten Ausführungsbeispiel umfaßt die Inkrementalsignal-Abtastanordnung der Abtasteinheit 20 insgesamt acht separate, jeweils quadratisch ausgebildete Inkrementalsignal-Detektorelemente 22.1 ― 22.8. Die Inkrementalsignal-Detektorelemente 22.1 ― 22.8 sind hierbei derart zueinander angeordnet, daß bei der entsprechenden Auflicht-Abtastung der Inkrementalteilungsspur 12 auf dem Maßstab 10 phasenversetzte Teil-Inkrementalsignale aus den verschiedenen Inkrementalsignal-Detektorelementen 22.1 ― 22.8 resultieren. Die relativen Phasenlagen der Teil-Inkrementalsignale aus den verschiedenen Inkrementalsignal-Detektorelementen 22.1 ― 22.8 sind in Figur 3 jeweils angegeben. Durch die in Figur 3 angedeutete Gegentaktverschaltung der entsprechenden Detektorelemente läßt sich in bekannter Art und Weise ein Paar um 90° phasenversetzter, sinus- bzw. cosinusförmiger Inkrementalsignale erzeugen.
Weiter sei an dieser Stelle auf die bekannte Art und Weise der Inkrementalsignal-Erzeugung nicht eingegegangen; es wird in diesem Zusammenhang auf die oben erwähnte Publikation von R. Burgschat sowie die DE 195 27 287 A1 verwiesen.

Zur photoelektrischen Abtastung der benachbart zur Inkrementalteilungsspur 12 angeordneten Referenzmarkierungen 13.1, 13.2 auf dem Maßstab 10 umfaßt die erfindungsgemäße Abtasteinheit des gezeigten Ausführungsbeispiels nunmehr ingesamt vier Referenzimpuls-Detektorelemente 24.1 ― 24.4. Je ein Paar der Referenzimpuls-Detektorelemente 24.1 ― 24.4 dient hierbei zur Abtastung einer der beiden Referenzmarkierungen 13.1, 13.2 bzw. Referenzmarkierungsspuren 14.1, 14.2 auf dem Maßstab 10. Die beiden in Figur 3 links angeordneten Referenzimpuls-Detektorelemente 24.1, 24.2 dienen zur Abtastung der in Figur 1 links angeordneten Referenzmarkierungsspur 14.1, die beiden in Figur 3 rechts angeordneten Referenzimpuls-Detektorelemente 24.3, 24.4 werden zur Abtastung der in Figur 1 rechts angeordneten Referenzmarkierungsspur 14.2 verwendet.

Die vier Referenzimpuls-Detektorelemente 24.1 ― 24.4 sind im dargestellten Ausführungsbeispiel allesamt identisch rechteckförmig ausgebildet, wobei die Rechteckslängsachsen jeweils in Meßrichtung x orientiert sind. Grundsätzlich kann selbstverständlich auch eine andere Geometrie der Referenzimpuls-Detektorelemente gewählt werden.

Die zur Abtastung einer Referenzmarkierung 13.1, 13.2 jeweils vorgesehenen zwei Referenzimpuls-Detektorelemente 24.1 und 24.2 bzw. 24.3 und 24.4 sind in Meßrichtung x versetzt zueinander angeordnet, so daß bei der Abtastung der jeweiligen Referenzmarkierung 13.1, 13.2 zwei phasenversetzte Teil-Referenzimpulssignale resultieren. Der Abstand der beiden derart erzeugten Teil-Referenzimpulssignale beträgt in der gezeigten Ausführungsform in Meßrichtung x dabei etwa 0.5mm, was bei einer Teilungsperiode der Inkrementalteilungsspur von TP = 20µm dann entsprechend 25 Signalperioden des Inkrementalsignales ausmacht.

Die verschiedenen optoelektronischen Bauelemente wie Lichtquelle und Detektorelemente sind in der Abtasteinheit 20 allesamt auf einer Seite eines Trägerkörpers 25 angeordnet. Über eine oberhalb der Bauelemente angeordnete Glasplatte 26 werden die Bauelemente gegen mechanische Beschädigung im Meßbetrieb geschützt.

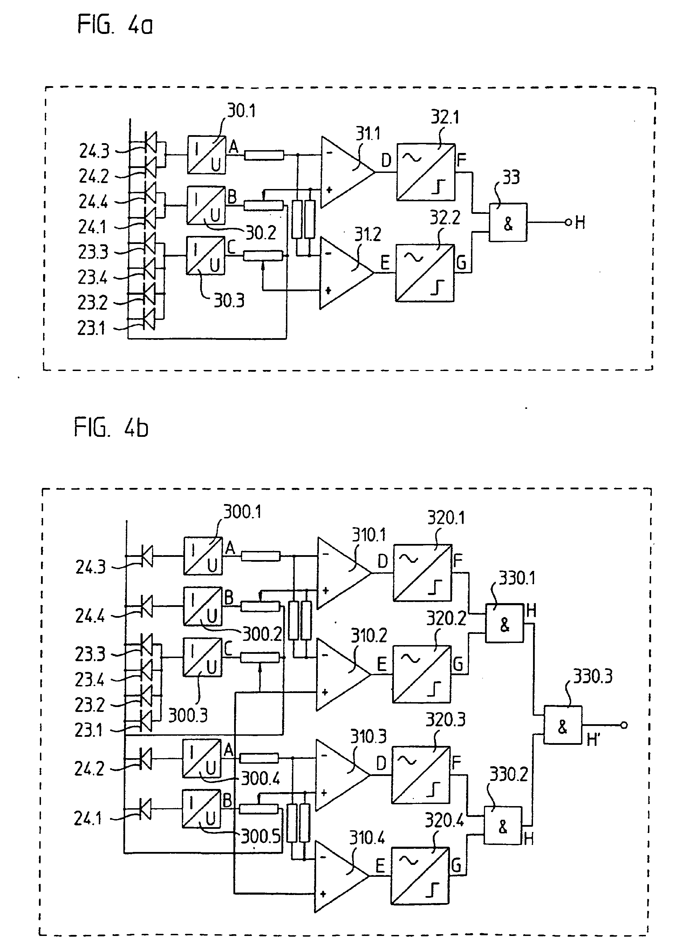

Im Zusammenhang mit der Verarbeitung der Signale und der Erzeugung des letztlich an die Auswerteeinheit zu übertragenden Ausgangs-Referenzimpulssignales sei an dieser Stelle auf die nachfolgende Beschreibung der Schaltungsanordnungen in den Figuren 4a und 4b verwiesen.

Für die Weiterverarbeitung der Teil-Referenzimpulssignale als auch für die Verarbeitung der erzeugten Teil-Inkrementalsignale sind auf Seiten der Abtasteinheit 20 ferner ingesamt vier Kompensations-Detektorelemente 23.1 ― 23.4 vorgesehen. Die Kompensations-Detektorelemente 23.1 ― 23.4 weisen in dieser Ausführungsform jeweils die Form eines gleichschenkligen Dreieckes auf und sind zwischen der Anordnung mit den Inkrementalsignal-Detektorelementen 21.1 - 21.8 und den Referenzimpuls-Detektorelementen 24.1 ― 24.2 angeordnet. Sämtliche Kompensations-Detektorelemente 23.1 ― 23.4 sind wie in Figur 3 erkennbar seriell miteinander verschaltet.

Es ergibt sich aufgrund der gewählten Anordnung der verschiedenen Detektorelemente somit eine äußerst kompakte Ausgestaltung der Abtasteinheit 20. Gleichzeitig stehen aber detektorseitig hinreichend große Flächen zur Detektion der verschiedenen Abtastsignale zur Verfügung.

Die Kompensations-Detektorelemente 23.1 ― 23.4 werden im Meßbetrieb von reflektiertem Licht aus dem Bereich der Inkrementalteilungsspur 12 beaufschlagt. Aufgrund der relativ großen räumlichen Ausdehnung der Kompensations-Detektorelemente 23.1 ― 23.4 in Meßrichtung x und der gewühlten seriellen Verschaltung derselben resultiert bei der Abtastung der Inkrementalteilungsspur 12 daraus ein Kompensationssignal mit weitestgehend gleichbleibendem Signalpegel. Zur Nutzung des Kompensationssignales bei der Erzeugung des Ausgangs-Referenzimpulssignales sei wiederum auf die nachfolgende Beschreibung möglicher Schaltungsanordnungen in den Figuren 4a und 4b verwiesen.

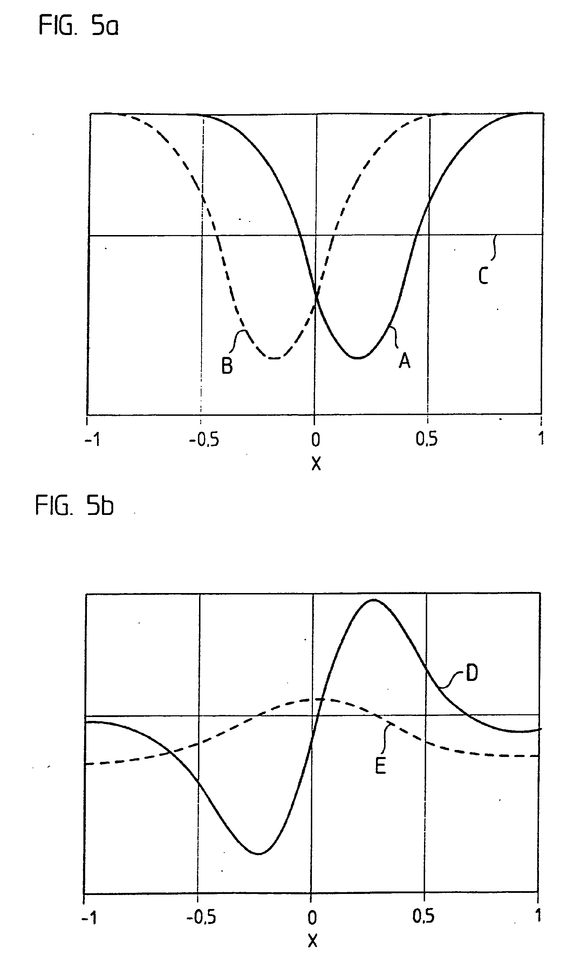

Figur 4a zeigt hierbei eine erste Ausführungsform einer Schaltungsanordnung, mit der eine Erzeugung eines Ausgangs-Referenzimpulssignales H über die oben beschriebene Abtasteinheit möglich ist. Im Rahmen der nachfolgenden Beschreibung dieser Schaltungsanordnung sei auch auf die Figuren 5a ― 5d verwiesen, die verschiedene Signale A ― H im Bereich der zu detektierenden Referenzposition x_{REF} = 0 veranschaulichen, die bei der Erzeugung des gewünschten Ausgangs-Referenzimpulssignales eine Rolle spielen.

In der Auswertungs-Variante gemäß Figur 4a gelangen die über die beiden Referenzimpuls-Detektorelemente 24.3, 24.2 erfaßten Teil-Referenzimpulssignale auf einen ersten Strom-Spannungs-Wandler 30.1; die über die zwei Referenzimpuls-Detektorelemente 24.4, 24.1 erfaßten Teil-Referenzimpulssignale auf einen zweiten Strom-Spannungs-Wandler 30.2. An den Ausgängen der beiden Strom-Spannungs-Wandler 30.1, 30.2 liegen die beiden Signale A und B an, die in Figur 5a im Bereich der Referenzposition x_{REF} = 0 veranschaulicht werden.

Es werden demzufolge jeweils diejenigen Referenzimpuls-Detektorelemente 24.1 ― 24.4 seriell auf den Eingang eines Strom-Spannungs-Wandlers 30.1, 30.2 geschaltet, die sich in der Abtasteinheit senkrecht zur Meßrichtung x direkt gegenüberliegen.

Die über die vier seriell verschalteten Kompensations-Detektorelemente 23.1 - 23.4 detektierten Teil-Kompensationssignale wiederum gelangen auf einen dritten Strom-Spannungs-Wandler 30.3. An dessen Ausgang resultiert dann das Kompensationssignal C mit nahezu gleichbleibendem Signalpegel, welches ebenfalls in Figur 5a dargestellt ist.

Aus den Signalen A, B und C wird nachfolgend durch geeignet beschaltete Operationsverstärker 31.1, 31.2 die Differenz und die Summe aus den beiden analogen Signalen A und B gebildet. Am Ausgang des ersten Operationsverstärkers 31.1 liegt dann mit dem Signal D das entsprechende Differenzsignal aus den beiden Signalen A und B an; am Ausgang des zweiten Operationsverstärkers 31.2 resultiert das Summensignal E aus den beiden Signalen A und B. Die derart generierten Signale D und E sind in Figur 5b gezeigt.

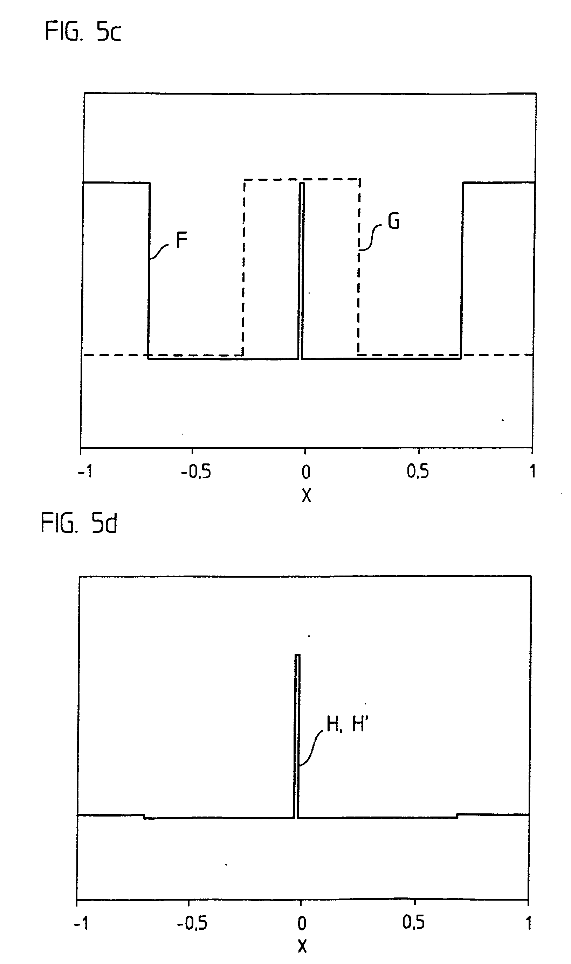

Aus den beiden Signalen D und E werden anschließend über die beiden Fensterkomparatoren 32.1, 32.2 entsprechende rechteckförmige Signale F und G erzeugt, die in Figur 5c veranschaulicht seien.

Daraufhin werden die Signale F und G einer Verknüpfungsstufe 33 zugeführt, die eine logische UND-Verknüpfung zwischen diesen Signalen durchführt. Nach der entsprechenden UND-Verknüpfung liegt dann am Ausgang der Verknüpfungsstufe 33 schließlich an der Referenzposition x_{REF} = 0 das gewünschte Ausgangs-Referenzimpulssignal H an, welches wiederum in Figur 5d dargestellt ist.

Diese Ausführungsform einer möglichen Schaltungsanordnung zur Erzeugung eines Ausgangs-Referenzimpulssignales ist nunmehr insbesondere einfach aufgebaut und umfaßt nur wenige Elektronik-Komponenten.

Desweiteren ist die oben erwähnte Forderung nach Invarianz der Phasenbeziehung zwischen dem Ausgangs-Referenzimpulssignal und den Inkrementalsignalen im Fall der Verdrehung um die z-Achse gewährleistet.

Eine zweite Ausführungsform einer Schaltungsanordnung zur Erzeugung eines Ausgangs-Referenzimpulssignales aus den verschiedenen Signalen, die über die erfindungsgemäße Abtasteinheit detektiert werden, sei abschließend anhand von Figur 4b erläutert.

Im Unterschied zum vorherigen Beispiel erfolgt nunmehr eine getrennte Verarbeitung der Teil-Referenzimpulsignale derjenigen Referenzimpuls-Detektorelemente, die jeweils auf einer Seite der Abtasteinheit angeordnet und zur Abtastung einer Referenzmarkierung auf dem Maßstab vorgesehen sind. Im dargestellten Beispiel ist demzufolge ein erster Verarbeitungskanal in der gezeigten Schaltungsanordnung vorgesehen, in dem die Teil-Referenzimpulssignale der beiden Referenzimpuls-Detektorelemente 24.3, 24.4 verarbeitet werden, welche aus der Abtastung der ersten Referenzmarkierung 13.1 resultieren; in einem zweiten Verarbeitungskanal werden die Teil-Referenzimpulssignale der beiden Referenzimpuls-Detektorelemente 24.1, 24.2 verarbeitet, die sich aus der Abtastung der zweiten Referenzmarkierung 13.2 ergeben. Pro Verarbeitungskanal werden demzufolge lediglich diejenigen Teil-Referenzimpulssignale von Detektorelementen verarbeitet, die aus der Abtastung der gleichen Referenzmarkierung auf dem Maßstab resultieren. Im jeweils anderen Verarbeitungskanal erfolgt die Signalverarbeitung derjenigen Teil-Referenzimpulssignale, die aus der Abtastung der gegenüberliegenden Referenzmarkierung resultieren.
Gemeinsam werden hingegen in beiden Verarbeitungskanälen die über die Kompensations-Detektorelemente 23.1 ― 23.4 erzeugten Signale genutzt. Auf die besonderen Vorteile dieser Auswerteanordnung zur Signalverarbeitung sei im Verlauf der nachfolgenden Beschreibung noch näher eingegangen.

Die über die vier Referenzimpuls-Detektorelemente 24.1 ― 24.4 erzeugten Teil-Referenzimpulssignale werden nunmehr jeweils einem der ebenfalls vier vorgesehenen Strom-Spannungs-Wandler 300.1 ― 300.4 zugeführt. Im ersten Verarbeitungskanal resultieren am Ausgang der Strom-Spannungswandler 300.1, 300.2 die beiden Signale A, B, die in Figur 5a gezeigt sind. Identisch hierzu werden die Teil-Referenzimpulssignale aus den Referenzimpuls-Detektorelementen 24.11 24.2 den beiden Strom-Spannungs-Wandlern 300.4, 300.5 im zweiten Verarbeitungskanal zugeführt. An deren Ausgängen liegen im Bereich der Referenzposition x_{REF} = 0 dann ebenfalls die Signale A, B an, die in Fig. 5a gezeigt sind.

Auf einen weiteren Strom-Spannungs-Wandler 300.3 werden die Signale der Kompensations-Detektorelemente 23.1 ― 23.4 geschaltet; das entsprechende Kompensationssignal C am Ausgang des Strom-Spannungs-Wandlers 300.3 mit nahezu gleichbleibendem Signalpegel ist ebenfalls wieder in Fig. 5a gezeigt. Das derart erzeugte Kompensationssignal C wird nachfolgend in beiden Verarbeitungskanälen genutzt.

In beiden Verarbeitungskanälen wird anschließend mit Hlfe des Kompensationssignales C jeweils die Summe und die Differenz aus den Signalen A und B gebildet. An den Ausgängen der entsprechend beschalteten Operationsverstärker 310.1, 310.3 des ersten Verarbeitungskanales liegt dann mit den Signalen D und E das entsprechende Differenz- und Summensignal an. Die Signale D und E sind wiederum in Figur 5b gezeigt. Entsprechend erfolgt auch die Verarbeitung der Signale A und B im zweiten Verarbeitungskanal, in dem dann an den Ausgängen der beiden ensprechend beschalteten Operationsverstärker 310.3, 310.4 das Differenzsignal D sowie das Summensignal E anliegt.

Mit Hilfe nachgeordneter Fensterkomparatoren 320.1 ― 320.4 werden die Summen- und Differenzsignale E, D anschließend in entsprechende rechteckförmige Signale G und F umgewandelt, wie sie wiederum in Figur 5c dargestellt sind.

In jedem der beiden Verabeitungskanäle erfolgt anschließend über ein Verknüpfungselement 330.1, 330.2 die logische UND-Verknüpfung der beiden Signale F und G. Am Ausgang der Verknüpfungselemente liegt dann in beiden Verarbeitungskanälen im Bereich der Referenzposition x_{REF} = 0 ein Signal H vor, das in Figur 5d gezeigt ist.

Über die nochmalige logische UND-Verknüpfung der beiden Signale H aus den zwei Verarbeitungskanälen mit Hilfe eines dritten Verknüpfungselementes 330.3 wird schließlich das gewünschte Ausgangs-Referenzimpulssignal H' erzeugt. Das Ausgangs-Referenzimpulssignal H' ist hierbei im Fall einer korrekten Detektion von Teil-Referenzimpulssignalen auf beiden Seiten der Inkrementalspur identisch mit den Signalen H in den beiden Verarbeitungskanälen.

Die in Figur 4b dargestellte Schaltungsanordnung bietet gegenüber der in Figur 4a erläuterten ersten Schaltungsanordnung einen weiteren Vorteil. So ist hierbei aufgrund der getrennten Verarbeitung der Signale aus den Referenzmarkierungen auf beiden Seiten der Inkrementalspur gewährleistet, daß etwa aus einer eventuellen Verschmutzung auf einer Seite keine fehlerhafte Erzeugung eines Referenzimpulssignales resultiert. Dies wird letztlich durch die abschließend erfolgende logische UND-Verknüpfung der beiden Signale H aus den zwei Verarbeitungskanälen über das Verknüpfungselement 330.3 sichergestellt.

Desweiteren gewährleistet auch diese Variante, daß auch bei einer eventuellen Verdrehung der Abtasteinheit gegenüber dem Maßstab die Phasenlage des erzeugten Ausgangs-Referenzimpulssignales H' gegenüber den Inkrementalsignalen erhalten bleibt. Dies ist darauf zurückzuführen, daß sich die Phasenlage der jeweiligen Signale H aus den gegenüberliegend benachbarten Bereichen in einem derartigen Fall gegensinning zueinander ändert. Aufgrund der ausgangsseitig erfolgenden logischen UND-Verknüpfung wiederum bleibt die Phasenlage des derart resultierenden Ausgangs-Referenzimpulssignales H' jedoch erhalten; lediglich die Breite des entsprechenden Rechteckpulses H' verändert sich in diesem Fall.

Die in den beiden Schaltungsanordnungen 4a und 4b vorgesehenen Bauelemente zur Verarbeitung der von den Referenzimpuls-Detektorelementen erzeugten Teil-Referenzimpulssignale sind vorzugsweise ebenfalls allesamt auf Seiten der Abtasteinheit angeordnet. Dies kann beispielsweise auf dem Trägerkörper 25 erfolgen, auf dem auch die restlichen optoelektronischen Bauelemente angeordnet werden. Ausgangsseitig liefert die erfindungsgemäße Abtasteinheit dann neben den Inkrementalsignalen das Ausgangs-Referenzimpulssignal H, H', das in der nachgeordneten Auswerteeinheit weiterverarbeitet werden kann.

Neben den erläuterten Beispielen existieren im Rahmen der vorliegenden Erfindung selbstverständlich noch eine Vielzahl weiterer Ausführungsmöglichkeiten.

## Patentansprüche

1. Abtasteinheit für eine optische Positionsmeßeinrichtung, die zur Abtastung eines Maßstabes (10) in einer Meßrichtung (x) geeignet ist, weicher mindestens eine Inkrementalteilungsspur (12) sowie zwei Referenzmarkierungen (13.1, 13.2) an mindestens einer definierten Referenzposition (x_{REF}) umfaßt und wobei die Abtasteinheit (20) folgende Komponenten umfaßt:
- eine Lichtquelle (21),
- eine symmetrisch um die Lichtquelle (21) angeordnete Inkrementalsignal-Abtastanordnung aus mehreren Inkrementalsignal-Detektorelementen (22.1 - 22.8), die jeweils derart zueinander angeordnet sind, daß damit phasenversetzte Teil-Inkrementalsignale aus der Abtastung der Inkrementalteilungsspur (12) erzeugbar sind,
- mindestens zwei Referenzimpuls-Detektorelemente (24.1 - 24.4), die senkrecht zur Meßrichtung (x), beidseitig und jeweils benachbart zur Inkrementalsignal-Abtastanordnung angeordnet sind und zur Erzeugung eines Ausgangs-Referenzimpulssignales (H') dienen *,* wobei je mindestens einer der Referenzimpuls-Detektorelemente (24.1-24.4) zur Abtastung je einer der Referenzmarkierungen (13.1,13.2) geeignet ist.

2. Abtasteinheit nach Anspruch 1, wobei jeweils mindestens zwei Referenzimpuls-Detektorelemente (24.1 - 24.4) auf einer Seite der Inkrementalsignal-Abtastanordnung angeordnet sind und über jedes der mindestens vier Referenzimpuls-Detektorelemente (24.1 - 24.4) ein Teil-Referenzimpulssignal erzeugbar ist.

3. Abtasteinheit nach Anspruch 1, wobei die Referenzimpuls-Detektorelemente (24.1 - 24.4) jeweils rechteckförmig ausgebildet sind und die Rechteck-Längsachse in Meßrichtung (x) orientiert ist.

4. Abtasteinheit nach Anspruch 2, wobei die jeweils zwei Referenzimpuls-Detektorelemente (24.1, 24.2; 24.3, 24.4) auf einer Seite der Inkrementalsignal-Abtastanordnung in Meßrichtung (x) beabstandet zueinander angeordnet sind.

5. Abtasteinheit nach Anspruch 1, wobei die Abtasteinheit (20) ferner mehrere Kompensations-Detektorelemente (23.1 - 23.4) umfaßt, die zur Erzeugung eines Kompensationssignales (C) mit konstantem Signalpegel dienen.

6. Abtasteinheit nach Anspruch 5, wobei die Kompensations-Detektorelemente (23.1 - 23.4) zwischen der Inkrementalsignal-Abtastanordnung und den Referenzimpuls-Detektorelementen . (24.1 - 24.4) angeordnet und seriell miteinander verschaltet sind.

7. Abtasteinheit nach Anspruch 6, wobei die Abtasteinheit (20) vier Kompensations-Detektorelemente (23.1 - 23.4) umfaßt, die jeweils die Form eines gleichschenkligen Dreieckes aufweisen und alle Kompensations-Detektorelemente (23.1 - 23.4) symmetrisch um die Inkrementalsignal-Abtastanordnung plaziert sind.

8. Abtasteinheit nach Anspruch 1, wobei die Abtasteinheit (20) ferner Bauelemente zur Verarbeitung der von den Referenzimpuls-Detektorelementen (24.1 - 24.4) erzeugten Teil-Referenzimpulssignale umfaßt.

9. Abtasteinheit nach Anspruch 8, wobei über die Bauelemente die Bildung eines Summen- und eines Differenzsignales (D, E) aus den Teil-Referenzimpulssignalen erfolgt, die an den Ausgängen derjenigen Detektorelemente (24.1 - 24.4) anliegen, die in Meßrichtung versetzt zueinander angeordnet sind und nach Umwandlung der Summen- und Differenzsignale (D, E) in rechteckförmige Signale (F, G) eine logische UND-Verknüpfung des Summen- und Differenzsignales erfolgt, so daß die logische UND-Verknüpfung das Ausgangs-Referenzimpulssignal (H, H') liefert.

10. Abtasteinheit nach den Ansprüchen 2 und 8, wobei die Abtasteinheit (20) je einen Verarbeitungskanal mit mehreren elektronischen Bauelementen zur Verarbeitung derjenigen Teil-Referenzimpulssignate umfaßt, die jeweils auf einer Seite der Inkrementalsignal-Abtastanordnung erzeugbar sind.

11. Abtasteinheit nach Anspruch 10, wobei jedem Verarbeitungskanal die Teil-Referenzimpulssignale der zwei zugeordneten Referenzimpuls-Detektorelemente (24.1 - 24.4) zuführbar sind und am Ausgang jedes Verarbeitungskanales ein Referenzimpulssignal (H) anliegt.

12. Abtasteinheit nach Anspruch 11, wobei die Abtasteinheit (20) ein Verknüpfungselement (330.3) umfaßt, dem die ausgangsseitigen Referenzimpulssignale (H) jedes Verarbeitungskanales zuführbar sind, so daß am Ausgang des Verknüpfungselementes (330.3) das weiterverarbeitbare Ausgangs-Referenzimpulssignal (H') anliegt.

13. Abtasteinheit nach Anspruch 12, wobei über das Verknüpfungselement (330.3) eine logische UND-Verknüpfung erfolgt.

14. Abtasteinheit nach Anspruch 11, wobei jeder Verarbeitungskanal
a) Bauelemente (310.1 - 310.4) zur Summen- und Differenzbildung umfaßt, denen die Teil-Referenzimpulssignale zuführbar sind,
b) jeweils dem Summen- und Differenzbildung-Bauelementen (310.1 - 310.4) nachgeordnete Fensterkomparatoren (320.1 - 320.4) umfaßt, die Eingangssignale in rechteckförmige Ausgangssignale (F, G) umwandeln,
c) ein den Fensterkomparatoren (320.1 - 320.4) nachgeordnetes Verknüpfungselement (330.1, 330.2) umfaßt, dem die rechteckförmigen Ausgangssignale (F, G) des Fensterkomparators (320.1 - 320.4) zuführbar sind, und über das eine logische UND-Verknüpfung erfolgt.

15. Abtasteinheit nach Anspruch 14, wobei den beiden Verarbeitungskanälen ein weiteres Verknüpfungselement (330.3) nachgeordnet ist, über das eine logische UND-Verknüpfung der am Ausgang der beiden Verarbeitungskanäle anliegenden Signale (H) erfolgt.

16. Optische Positionsmeßeinrichtung mit einer Abtasteinheit (20) nach mindestens einem der vorhergehenden Ansprüche.

## Claims

1. Scanning unit for an optical position measuring device which is suitable for scanning a scale (10) in a measuring direction (x), which scale comprises at least one incremental division track (12) and also two reference markings (13.1, 13.2) at at least one defined reference position (x_{REF}) and the scanning unit (20) comprising the following components:
- a light source (21),
- an incremental signal scanning arrangement which is disposed symmetrically around the light source (21) and comprises a plurality of incremental signal detector elements (22.1 - 22.8) which are disposed respectively relative to each other such that phase-offset partial incremental signals can thus be produced from scanning the incremental division track (12),
- at least two reference impulse detector elements (24.1 - 24.4) which are disposed on both sides perpendicular to the measuring direction (x) and respectively adjacent to the incremental signal scanning arrangement and serve to produce an output reference impulse signal (H'), at least one of the reference impulse detector elements (24.1 - 24.4) respectively being suitable for scanning respectively one of the reference markings (13.1, 13.2).

2. Scanning unit according to claim 1, at least two reference impulse detector elements (24.1 - 24.4) respectively being disposed on one side of the incremental signal scanning arrangement and a partial reference impulse signal being able to be produced via each of the at least four reference impulse detector elements (24.1 - 24.4).

3. Scanning unit according to claim 1, the reference impulse detector elements (24.1 - 24.4) respectively having a rectangular configuration and the rectangular longitudinal axis being orientated in the measuring direction (x).

4. Scanning unit according to claim 2, the respectively two reference impulse detector elements (24.1, 24.2; 24.3, 24.4) on one side of the incremental signal scanning arrangement being disposed at a spacing relative to each other in the measuring direction (x).

5. Scanning unit according to claim 1, the scanning unit (20) comprising in addition a plurality of compensation detector elements (23.1 - 23.4) which serve to produce a compensation signal (C) with a constant signal level.

6. Scanning unit according to claim 5, the compensation detector elements (23.1 - 23.4) being disposed between the incremental signal scanning arrangement and the reference impulse detector elements (24.1 - 24.4) and being connected to each other in series.

7. Scanning unit according to claim 6, the scanning unit (20) comprising four compensation detector elements (23.1 - 23.4) which have respectively the shape of an equilateral triangle and all the compensation detector elements (23.1 - 23.4) being placed symmetrically around the incremental signal scanning arrangement.

8. Scanning unit according to claim 1, the scanning unit (20) comprising in addition components for processing the partial reference impulse signals produced by the reference impulse detector elements (24.1 - 24.4).

9. Scanning unit according to claim 8, the formation of a sum- and a difference signal (D, E) from the partial reference impulse signals being effected via the components, said partial reference impulse signals being applied at the outputs of those detector elements (24.1 - 24.4) which are disposed offset relative to each other in the measuring direction, and a logic AND operation of the sum- and difference signal being effected after conversion of the sum- and difference signals (D, E) into rectangular signals (F, G) so that the logic AND operation delivers the output reference impulse signal (H, H').

10. Scanning unit according to claims 2 and 8, the scanning unit (20) comprising respectively one processing channel with a plurality of electronic components for processing those partial reference impulse signals which can be produced respectively on one side of the incremental signal scanning arrangement.

11. Scanning unit according to claim 10, the partial reference impulse signals of two associated reference impulse detector elements (24.1 - 24.4) being able to be supplied to each processing channel and a reference impulse signal (H) being applied at the output of each processing channel.

12. Scanning unit according to claim 11, the scanning unit (20) comprising a linking element (330.3) to which the output-side reference impulse signals (H) of each processing channel can be supplied so that the further processed output reference impulse signal (H') is applied at the output of the linking element (330.3).

13. Scanning unit according to claim 12, a logic AND operation being effected via the linking element (330.3).

14. Scanning unit according to claim 11, each processing channel
a) comprising components (310.1 - 310.4) for summation and subtraction, to which the partial reference impulse signals can be supplied,
b) comprising window comparators (320.1 - 320.4) which are disposed respectively subsequent to the summation and subtraction components (310.1 - 310.4) which convert the input signals into rectangular output signals (F, G),
c) comprising a linking element (330.1, 330.2) which is disposed subsequent to the window comparators (320.1 - 320.4), to which linking element the rectangular output signals (F, G) of the window comparator (320.1 - 320.4) can be supplied and via which a logic AND operation is effected.

15. Scanning unit according to claim 14, a further linking element (330.3) being disposed subsequent to the two processing channels, via which a logic AND operation of the signals (H) which are applied at the output of the two processing channels is effected.

16. Optical position measuring device having a scanning unit (20) according to at least one of the preceding claims.

## Revendications

1. Unité de balayage pour un dispositif de mesure optique de position, qui est appropriée à balayer dans une direction de mesure (x) une règle de mesure (10) comprenant au moins une piste à division incrémentielle (2) ainsi que deux marques de référence (13.1, 13.2) sur au moins une position de référence (x_{REF}) définie, cette unité de balayage présentant les composants suivants :
- une source lumineuse (21),
- un système de balayage à signal incrémentiel, symétrique par rapport à la source lumineuse et composé de plusieurs éléments détecteurs à signal incrémentiel (22.1-28.8) disposés les uns par rapport aux autres de manière à pouvoir produire des signaux incrémentiels partiels élémentaires déphasés résultant du balayage de la piste à division incrémentielle,
- au moins deux éléments détecteurs d'impulsion de référence (24.1 - 24.4) qui sont disposés perpendiculairement à la direction de mesure (x), des deux côtés, en étant proches chacun du système de balayage à signal incrémentiel et qui servent à produire un signal de sortie d'impulsion de référence (4'), chaque fois au moins un élément détecteur d'impulsion de référence (24.1 - 24.4) étant approprié à balayer chaque fois une des marques de référence (13.1, 13.2).

2. Unité de balayage selon la revendication 1, dans laquelle au moins deux éléments détecteurs d'impulsion de référence (24.1 - 24.4) sont disposés sur chaque côté du système de balayage à signal incrémentiel, chacun de ces éléments détecteurs (24.1 - 24.4) au nombre de quatre au moins pouvant produire un signal d'impulsion de référence élémentaire.

3. Unité de balayage selon la revendication 1, dans laquelle chacun des éléments détecteurs d'impulsion de référence (24.1 - 24.4) a la forme d'un rectangle dont l'axe longitudinal est orienté selon la direction de mesure (x).

4. Unité de balayage selon la revendication 2, dans laquelle les deux éléments détecteurs d'impulsion de référence (24.1, 24.2, 24.3, 24.4) disposés de chaque côté du système de balayage de signal incrémentiel sont espacés l'un de l'autre selon la direction de mesure (x).

5. Unité de balayage selon la revendication 1, cette unité comportant de plus plusieurs éléments détecteurs de compensation (23.1 - 23.4) servant à produire un signal de compensation (C) présentant un niveau constant.

6. Unité de balayage selon la revendication 5, dans laquelle les éléments détecteurs de compensation (23.1 - 23.4) sont disposés entre le système de balayage de signal incrémentiel et les éléments détecteurs d'impulsion de référence (24.1 - 24.4) et sont reliés en série.

7. Unité de balayage selon la revendication 6, cette unité (20) comportant quatre éléments détecteurs de compensation (23.1 - 23.4) qui ont chacun la forme d'un triangle équilatéral et qui sont tous disposés symétriquement autour du système de balayage de signal incrémentiel.

8. Unité de balayage selon la revendication 1, cette unité (20) comprenant de plus des composants pour traiter les signaux de référence élémentaires produits par les éléments détecteurs d'impulsion de référence.

9. Unité de balayage selon la revendication 8, dans laquelle les composants produisent un signal de somme et un signal de différence (D, E) à partir des signaux d'impulsion de référence élémentaires présents sur les sorties des éléments détecteurs correspondants ((24.1 - 24.4) qui sont décalés les uns par rapport aux autres selon la direction de mesure, et après conversion des signaux de somme et de différence (D, E) en signaux rectangulaires (F, G) a lieu une combinaison logique ET de signal de somme et de différence de sorte que cette liaison délivre un signal d'impulsion de référence de sortie (H, H').

10. Unité de balayage selon les revendications 2 et 8, cette unité (20) comprenant chaque fois un canal de traitement comportant plusieurs composants électroniques pour traiter les signaux d'impulsion de référence élémentaires pouvant être produits de chaque côté du système de balayage de signal incrémentiel.

11. Unité de balayage selon la revendication 10, dans laquelle à chaque canal de traitement peuvent être envoyés les signaux d'impulsion de référence élémentaires provenant des deux éléments détecteurs d'impulsion de référence qui lui sont associés (24.1 - 24.4), de sorte que chaque canal présente à sa sortie un signal d'impulsion de référence (H).

12. Unité de balayage selon la revendication 11, cette unité (20) comprenant un élément de combinaison (330.3) auquel peuvent être amenés les signaux d'impulsion de référence (H) sortant de chaque canal de traitement de sorte que le signal d'impulsion de référence de sortie (H') à traiter ultérieurement se trouve à la sortie de l'élément de combinaison (330.3).

13. Unité de balayage selon la revendication 12, dans laquelle l'élément de combinaison (330.3) est une combinaison logique ET.

14. Unité de balayage selon la revendication 11, dans laquelle chaque canal de traitement comprend :
a) des composants (310.1 - 310.4) pour fonner la somme et la différence, et auxquels peuvent être envoyés les signaux d'impulsion de référence élémentaires,
b) des comparateurs de fenêtre (320.1 - 320-4) qui sont disposés chacun en aval du composant de formation de somme et de différence (310.1 - 310.4) correspondant et qui convertissent les signaux d'entrée en signaux de sortie rectangulaires (F , G),
c) un élément de combinaison (330.1, 330.2) en aval des comparateurs de fenêtre (320.1 - 320.4), auquel peuvent être envoyés les signaux de sortie (F, G) des comparateur de fenêtre (320.1 - 320.4) et qui produit une combinaison logique ET.

15. Unité de balayage selon la revendication 14, dans laquelle en aval des deux canaux de traitement est disposé un autre élément de combinaison (330.3) qui produit une combinaison logique ET des signaux présents à la sortie de ces deux canaux.

16. Dispositif optique de mesure de position équipé d'une unité de balayage (20) selon au moins une des revendications précédentes.
